Europäisches Patentamt

European Patent Office

Office européen des brevets

(11) Veröffentlichungsnummer: **0 097 847**
**B1**

(12) **EUROPÄISCHE PATENTSCHRIFT**

(45) Veröffentlichungstag der Patentschrifft:
**17.01.90**

(51) Int. Cl. ⁴: **G 01 D  5/16**

(21) Anmeldenummer: **83105602.3**

(22) Anmeldetag: **08.06.83**

(54) Linearer Wegaufnehmer.

(30) Priorität: **28.06.82 DE 8218497 U**

(43) Veröffentlichungstag der Anmeldung:
**11.01.84 Patentblatt 84/02**

(45) Bekanntmachung des Hinweises auf die Patenterteilung:
**17.01.90 Patentblatt 90/03**

㉞ Bennante Vertragsstaaten:
**AT CH DE FR GB IT LI**

(56) Entgegenhaltungen:
**GB-A-1 351 763**
**US-A-3 364 454**
**US-A-4 165 622**

(73) Patentinhaber: **HORST SIEDLE KG**
**D-7743 Furtwangen (DE)**

(72) Erfinder: **Blessing, Fritz**
**Schurwaldstrasse 8**
**D-7302 Ostfildern 1 (DE)**

(74) Vertreter: **Otte, Peter, Dipl.-Ing.**
**Tiroler Strasse 15**
**D-7250 Leonberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

### Stand der Technik

Die Erfindung geht aus von einem linearen Wegaufnehmer nach dem ersten Teil des Anspruchs 1. Bei solchen linearen Wegaufnehmern ist es bekannt, im Inneren eine beispielsweise rohrförmigen Gehäuses eine Widerstandsbahn stationär zu lagern und über dieser einen Schleifer gleitenzulassen, der dabei gleichzeitig eine parallele Abgriffsbahn ständig kontaktiert, so daß das von der Widerstandsbahn abgegriffene Potential über die Abgriffsbahn nach außen übertragen werden kann. Der Schleifer ist dabei an einer Schubstange befestigt, die längsverschieblich im Gehäuse gelagert ist, wobei die Hauptlagerung am Eintritt der Schubstange in das Gehäuse vorgesehen ist. Es ist üblich, solche Lagerungen als Gleitlager, beispielsweise mit Hilfe von Kunststoffbuchsen oder dergleichen auszubilden, wobei sich allerdings der erhebliche Nachteil ergeben kann, daß diese Lagerungen vergleichsweise schnell aus schlagen, da es für den Benutzer des Wegaufnehmer sehr schwierig, wenn nicht unmöglich ist, die Schubstange exakt mittig zu fassen und dabei jede Art von Parallelversatz oder Winkelversatz zu vermeiden. Eine außermittige oder im Winkel erfolgende Fassung der Schubstange führt aber notwendigerweise zu einer Verkantung in der Hauptlagerung am Gehäuseeintritt und zum Ausschlagen oder zur Zerstörung dieser Lagerung.

Problematisch ist bei solchen linearen Wegaufnehmern, ob diese nun von kürzerer oder längerer Bauart sind - wobei Längen von einem Meter oder darüber hinaus nicht selten sind, ferner, daß sich die Schubstange schon aufgrund ihres Eigengewichtes sowohl innerhalb des Gehäuse 5, wenn sie vollkommen eingeschoben ist, durchbiegen kann, als auch außerhalb des Gehäuses, so daß wiederum ein nicht genau achsparallele Lage der Schubstange mit Bezug auf ihre Hauptlagerung vorliegt. Eine solche Verkantung oder ein solcher Versatz ist aber nicht nur bezüglich der Zerstörung des Lagers nachteilig, sondern kann auch negative Einflüsse bezüglich der Funktion des Wegaufnehmers insofern verursachen, als bei schrägem Einführen einer längeren Rundstange in eine buchsenförmige Lagerung ein Phänomen zu Tage tritt, was die Erfahrung allgemein sofort verständlich macht, und was in einer stotternden oder ruckhaften Einführ- bzw. Ausziehbewegung ihren Ausdruck findet. Der Grund hierfür liegt darin, daß das Gehäuse des Wegaufnehmers praktisch eine lineare Führung für die Schubstange sicherstellt und bei verkanteter Einführung die Schubstange in der Hauptlagerung aufgrund ihrer Verkantung zum Verklemmen neigt: es ist dann eine größere Krafteinwirkung erforderlich, um die Schubstange ein weiteres Stück zu bewegen, worauf der Klemmvorgang dann wieder einsetzt und so fort.

Aus der US-A-3 364 454 ist ein linearer Wegaufnehmer gemäß dem ersten Teil des Anspruchs 1 bekannt, bei dem die einen O-Ring auf weisende Gleitlagerung eine geringe laterale Verschiebung zulässt.

Der Erfindung liegt die Aufgabe zugrunde, bei einem linearen Wegaufnehmer die vordere Hauptlagerung beim Austritt der Schubstange aus dem Gehäuse so auszubilden, daß fehlerhafte Fassungen der Schubstange durch den Antrieb, ein möglicher Winkelversatz und zu geringerem Maße auch ein Parallelversatz problemlos aufgenommen werden können und die Schubstange in ihrer Lagerung weich und ruckfrei gleitet.

### Vorteile der Erfindung

Diese Aufgabe löst der erfindungsgemäße lineare Wegaufnehmer mit den Merkmalen des Anspruchs 1 und hat den Vorteil, daß auch merkliche Schrägstellungen und Verkantungen der Schubstange infolge fehlender mittiger Fassung, durch Parallel- oder Winkelversatz ausgeglichen und aufgenommen werden können. Besonders vorteilhaft ist der durch die erfindungsgemäße Lagerung sichergestellte weich gleitende und ruckfreie Betrieb der Schubstange sowie der Umstand, daß die Lagerung die Schubstange zwar eindeutig und sicher führt, auf Störungen, außermittigen Betrieb oder sonstige Einflüsse aber elastisch nachgiebig reagieren kann und solche Einflüsse sicher aufnimmt und vernichtet, ohne diese weiterzuleiten.

Durch die in den abhängigen Ansprüchen aufgeführten Maßnahmen sind vorteilhafte Weiterbildungen und Verbesserungen des im Anspruch 1 angegebenen linearen Wegaufnehmers möglich. Besonders vorteilhaft ist der einfache und problemlose Aufbau, wobei zur Erzielung des pendelnd aufgehängten Innenlagers zu unmittelbaren Gleitführung der Schubstange ein üblicher O-Ring verwendet werden kann.

### Zeichnung

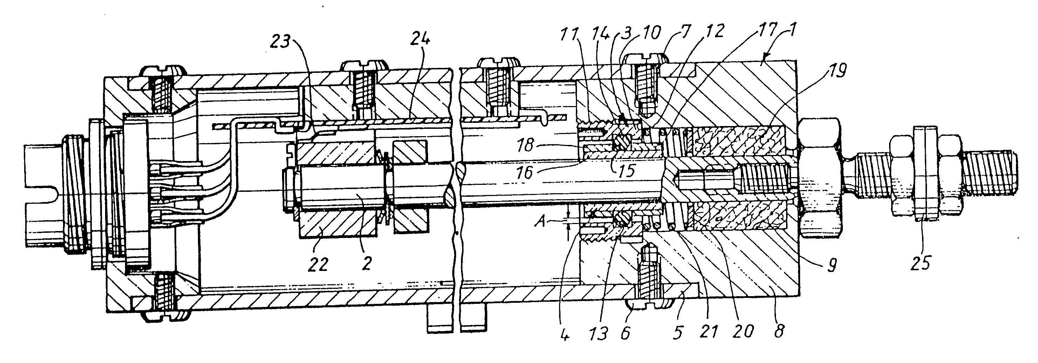

Ein Ausführungsbeispiel der Erfindung ist in der Zeichnung dargestellt und wird in der nachfolgenden Beschreibung näher erläutert. Die einzige Figur der Zeichnung zeigt in einer teilweise gebrochenen Darstellung einen Längsschnitt durch einen linearen Wegaufnehmer.

### Beschreibung des Ausführungsbeispieles

Der Grundgedanke der vorliegenden Erfindung besteht darin, den Hauptlagerbereich, also die Durchtrittsstelle der Schubstange 2 aus dem entsprechenden Gehäuseende, der in der Zeichnung mit 1 bezeichnet ist, so in ein mit Bezug auf die Schubstange stationäres Außenlager 3 und ein zu diesem pendelnd aufgehängtes Innenlager 4 zu unterteilen, daß die Schubstange in der Lage ist, die erwähnten Versatzbewegungen und Verwindungen durchzuführen, weil diese vom In

nenlager 4 elastisch nachgiebig bei Aufrechterhaltung der zentrischen Führung der Schubstange aufgenommen werden können.

Im einzelnen umfaßt das in der Zeichnung dargestellte Gehäuse eine rohrförmige Ummantelung 5 mit einem an dieser beispielsweise über Schrauben 6 und 7 befestigten endseitigen Abschlußlagerblock 8. Der Lagerblock 8 verfügt über eine abgetreppte zentrale Durchtrittsbohrung 9, in welcher das Außenlager 3 und das Innenlager 4 angeordnet sind.

Das Außenlager 3 ist von einem Lagerring 10 gebildet, der bei 11 mit einem Außengewinde in ein entsprechendes Innengewinde der Durchtrittsbohrung 9 des Lagerblocks 8 eingeschraubt ist, hier bis zu einem von einer Abschulterung 12 der Bohrung 9 gebildeten Anschlag. Ein wesentliches Merkmal des Lagerringes besteht darin, daß dieser über eine innere Ringnut 13 verfügt, die der Aufnahme eines elastischen Zwischenelements 14 dient, welches als elastomerer Ring ausgebildet sein kann und im speziellen Anwendungsfall ein üblicher O-Ring ist. Dieser O-Ring 14, wie das elastische Ringelement im folgenden ausschließlich noch bezeichnet wird, ist das einzige Verbindungs- und Lagerelement zwischen dem äußeren Lager 3 und dem inneren Lager 4. Dementsprechend ist der O-Ring 14 vom inneren Lager 4 ebenfalls mittels einer nach außen weisenden Ringnut 15 gehalten, wobei die Höhe der beiden Ringnuten 13 und 15 im äußeren Lager 3 und inneren Lager 4 jeweils so bemessen sind, daß der O-Ring 14 nicht ausweichen kann, beispielsweise durch eine starke Quetschung, sondern axial sicher gehalten ist, vorzugsweise mit einem geringen axialen Spiel. In der Zeichnung deutlich sichtbar ist der mit A bezeichnete lichte Abstand zwischen der äußeren Ringfläche des Innenlagers 4 und der inneren Ringfläche des Außenlagers 3; dieser Abstand ermöglicht, wie man erkennt, eine erhebliche Verkantung und Verdrehung und insgesamt eine pendelnde Aufhängung des Innenlagers 4 zum Außenlager 3. Durch die dem O-Ring eigene Elastizität ist auch ein geringerer Parallelversatz des Innenlagers 4 zum Außenlager 3 möglich, wobei, wie es sich versteht, die Schubstange 2 dann im allgemein buchsenförmigen Innenlager in Form einer üblichen, entsprechend tolerierten Gleitlagerung geführt ist.

Im einzelnen ist das Innenlager so aufgebaut, daß eine die Gleitlagerung und Führung der Schubstange 2 sicherstellende innere Buchse 6 vorgesehen ist, die vorzugsweise eine sogenannte handelsübliche DU-Buchse ist. Auf diese DU-Buchse 16 ist dann von der einen Seite zunächst eine feste erste ringförmige Lagerhülse 17 aufgepreßt; da die vorzugsweise verwendete DU-Buchse eine aus einem Band zusammengerollte geschlitzte Buchse ist, erhält sie durch das Aufpressen der ersten Lagerhülse auch ihre runde Form. Die Aufnahmenut 15 für den O-Ring ergibt sich dann durch Aufschieben einer zweiten Lagerhülse 18 von der anderen Seite, wobei zwischen diesen beiden Lagerhülsen auf der DU-Buchse 16 der O-Ring 14 gehalten ist.

Die gesamte Lagerung vervollständigt sich durch einen zunächst von innen in die Bohrung 9 des Lagerblocks 8 eingeschobenen Filz 19 geeigneter Abmessung, der als Abstreifer für die Schubstange dient und über eine Zwischenscheibe 20 von einer Feder 21 zusammengedrängt wird, so daß der Filz 19 die Schubstange eng, aber selbstverständlich entsprechend elastisch umgibt, damit die soeben beschriebene Pendellagerung zur Auswirkung kommt. Die Feder stützt sich mit ihrem anderen Ende an einen nach innen gerichteten Flansch am Lagerring 10 ab.

Es versteht sich, daß zur Montage dieser Pendellagerung mit Innenlager und Außenlager so vorgegangen werden muß, daß man in die Ringnut 13 am Lagerring zunächst den O-Ring 14 eingibt, was durch die Möglichkeit, ihn zusammenzupressen und stauchen zu können, problemlos erfolgen kann. Anschließend wird die mit einer der aufgepreßten Lagerhülsen schon versehene DU-Buchse 16 eingeschoben, bis der O-Ring 14 an der aufgepreßten Lagerhülse 17 oder 18 zur Anlage kommt. Es wird dann erst die zweite Lagerhülse 18 oder 17 auf die DU-Buchse aufgeschoben und der O-Ring 14 so fixiert zur sicheren, aber pendelnd nachgiebigen Lagerung des Innenlagers 4 im Außenlager 3. Es ist dann möglich, den Lagerring von innen nach Einlegen des Filzes 19 mit Beilegscheibe 20 und Feder in den Lagerblock 8 einzuschrauben und die Schubstange 2 in die DU-Buchse 16 einzuführen.

Auf die anderen Teile des linearen Wegaufnehmers, wie in der Zeichnung dargestellt, braucht nicht weiter eingegangen zu werden, da sie nicht Gegenstand der Erfindung sind; man erkennt am anderen Endbereich ein Gleitstück 22, weiches in nicht dargestellter Weise im Gehäuseinneren gleitet und sowohl die Schubstange 2 als auch den eigentlichen Schleifer 23 lagert, der auf der Widerstandsbahn 24 gleitet. Die Schubstange 2 ist insgesamt, also auch im Gleitstück 22 drehbar gelagert und verfügt an ihrem aus dem Gehäuse austretenden Ende noch über geeignete Befestigungsmittel 25 zur Verwendung beispielsweise mit einem sich bewegenden Maschinenteil.

## Patentansprüche

1. Linearer Wegaufnehmer, mit einem Längsgehäuse (1) mit Widerstandsbahn (24) und einem auf dieser gleitenden, von einer Schubstange (2) geführten Schleifer (23), die an ihrem Eintritt ins Gehäuse von einer Gleitlagerung gelagert ist, die ein elastisches Ringelement (14) aufweist, dadurch gekennzeichnet, daß das elastische Ringelement (14) als einzige Verbindung zwischen einem stationären radial äußeren Lager (3) und einem zu diesem pendelnd bewegbaren radial inneren Lager (4) gleichzeitig in sich gegenüberliegenden Ringnuten (13, 15) der beiden Lager (3, 4) gehalten ist, wobei die Schubstange (2) im inneren Lager (4) gleitet.

2. Wegaufnehmer nach Anspruch 1, dadurch gekennzeichnet, daß das radial äußere Lager (3) von einen in einen Abschlußblock (8) am Wegaufnehmergehäuse einschraubbaren Lagerring (10) besteht, der einen die Ringnut (15) des äußeren Lagers (3) bildenden Einstich aufweist, in welchen das elastische Ringelement (14) mit seiner äußeren Ringfläche mit lediglich geringem Axialspiel eingelegt ist.

3. Wegaufnehmer nach Anspruch 1 oder 2, dadurch gekennzeichnet, daß das radial innere Lager (4) von einer die Schubstange (2) führenden Gleitlagerbuchse (16) gebildet ist, auf die unter Zwischenlegung des elastischen Ringelements beidseitig Lagerhülsen (17, 18) aufgepreßt sind.

4. Wegaufnehmer nach einem der Ansprüche 1 bis 3, dadurch gekennzeichnet, daß in eine das radial innere und radial äußere Lager (3, 4) aufnehmende abgesetzte Bohrung (9) des Abschlußlagerblocks (8) am Gehäuse ein Abstreiffilz (19) eingelegt ist, der von einer sich am radial äußeren Lagerring (10) abstützenden Vorspannungsfeder (21) zusammengepreßt ist.

5. Wegaufnehmer nach Anspruch 3, dadurch gekennzeichnet, daß das elastische Ringelement ein O-Ring und die Gleitlagerbuchse DU-Buchse ist.

## Claims

1. A linear position pickup, having a longitudinal housing (1) with a resistance path (24) and a sliding wiper (23) sliding on the resistance path and guided by a push rod (2), which rod is mounted, at its entry into the housing, by a sliding bearing arrangement which has a resilient annular member (14), characterised in that the resilient annular member (14) is held as the only connection between a stationary radial outer bearing (3) and a radial inner bearing (4) which is movable like a pendulum relative to the outer bearing, at the same time in opposite annular grooves (13, 15) of the two bearings (3, 4), the push rod (2) sliding in the inner bearing (4).

2. A position pickup according to Claim 1, characterised in that the radial outer bearing (3) comprises a bearing ring (10) which can be screwed into an end block (8) on the pickup housing, which bearing ring has a recess forming the annular groove (15) of the outer bearing (3), into which recess the resilient annular member (14) is inserted with its outer annular surface with only slight axial play.

3. A position pickup according to Claim 1 or 2, characterised in that the radial inner bearing (4) is formed by a sliding bearing bush (16) guiding the push rod (2), on to both sides of which bush bearing are pressed sleeves (17, 18), the resilient annular member being interposed.

4. A position pickup according to any one of Claims 1 to 3, characterised in that a wiper felt (19) is inserted into a stepped hole (9) in the end bearing block (8) on the housing, which hole accommodates the radial inner and radial outer bearing (3, 4), which felt is pressed together by a pre-tensioning spring (21) supported on the radial outer bearing ring (10).

5. A position pickup according to Claim 3, characterised in that the resilient annular member is an O-ring and the sliding bearing bush is a DU-bush.

## Revendications

1. Capteur de course linéaire avec un boîtier longitudinal (1) avec une piste résistante (24) et un frotteur (23) glissant sur elle, commandé par un poussoir (2) qui, à son entrée dans le boîtier, est logé dans un palier lisse qui présente un élément annulaire élastique, caractérisé en ce que l'élément élastique (14) est la seule liaison entre un palier extérieur radial fixe (3) et un palier interne radial (4) pouvant avoir un mouvement pendulaire par rapport à celui-ci et il est maintenu simultanément dans deux gorges (13, 15) se faisant face des deux paliers (3, 4), le poussoir (2) coulissant dans le palier interne (4).

2. Capteur de course selon la revendication 1, caractérisé en ce que le palier externe radial (3) est constitué d'un bloc de fermeture (8), d'un palier annulaire (10) vissable dans le boîtier de capteur de course, qui présente une rainure formant la gorge (15) du palier externe (3), dans laquelle l'élément annulaire élastique (14) est logé dans sa surface annulaire externe ne laissant que peu de jeu axial.

3. Capteur de course selon la revendication 1 ou 2, caractérisé en ce que le palier interne radial (4) est formé d'une douille de palier lisse guidant le poussoir (2) sur laquelle est comprimé l'élément annulaire élastique encadré par deux graines de palier (17, 18).

4. Capteur de course selon l'une des revendications 1 à 3, caractérisé en ce qu'une tresse d'étoupe (19) est logée dans un trou étagé (9) du bloc de fermeture (8) logeant le palier interne radial et le palier externe radial (3, 4) sur le boîtier, cette tresse étant comprimée par un ressort de compression (21) s'appuyant sur l'anneau de palier (10) externe radial.

5. Capteur de course selon la revendication 3, caractérisé en ce que l'élément annulaire élastique est un joint torique et que la douille de palier lisse est une douille DU.

1